# EUROPÄISCHE PATENTANMELDUNG

(11) **EP 2 765 398 A1**
(43) Veröffentlichungstag der Anmeldung: **13.08.2014**
(21) Anmeldenummer: 14151021.4
(22) Anmeldetag: 14.01.2014
(51) Int. Cl.: G01F 23/26

(54) **Vorratsbehälter einer landwirtschaftlichen Verteilmaschine mit kapazitiv arbeitender Füllstandsmesseinrichtung**

(30) Priorität: 07.02.2013 DE 102013201982
(71) Anmelder: Horsch Maschinen GmbH, 92421 Schwandorf (DE)
(72) Erfinder: Köbler, Manfred, 93155 Hemau (DE); Fritsch, Stephan, 92442 Wackersdorf (DE); Haselhoff, Alexander, 92421 Schwandorf (DE); Hausner, Andreas, 92337 Sulzbach-Rosenberg (DE)
(74) Vertreter: Benninger, Johannes

(57) **Zusammenfassung**

Es ist ein festwandiger Vorrats-, Aufbewahrungs- und/oder Schüttgutbehälter (12) einer landwirtschaftlichen Verteilmaschine (14) zur Aufnahme von riesel- oder fließfähigem Schüttgut (16) oder von flüssigen Medien offenbart. Der Behälter (12) weist eine zumindest abschnittsweise trichterförmige Kontur mit unterer Auslassöffnung (18) und randseitigen Wandabschnitten (20, 20a, 20b, 20c) sowie eine nach kapazitivem Messprinzip arbeitende Füllstandsmesseinrichtung (22) auf, die wenigstens einen Leitungsabschnitt (24, 24a, 26) umfasst, der in einem unteren (28) Bereich des Behälters (12) mündet und im Behälterinnenraum (30) verlegt ist. Der wenigstens eine Leitungsabschnitt (24, 24a, 26) der Füllstandsmesseinrichtung (22) ist als flexibles Kabel ausgebildet.

## Beschreibung

Die vorliegende Erfindung betrifft einen Vorrats-, Aufbewahrungs- und/oder Schüttgutbehälter einer landwirtschaftlichen Verteilmaschine mit einer kapazitiv arbeitenden Füllstandsmesseinrichtung gemäß unabhängigem Anspruch 1.

Sowohl landwirtschaftliche Verteilmaschinen als auch landwirtschaftliche Erntemaschinen sind in der Regel mit Vorrats- oder Schüttgutbehältern ausgestattet. Mit Hilfe sog. landwirtschaftlicher Verteilmaschinen wie bspw. Sämaschinen, Pflanzenschutzspritzen oder Düngerstreuern werden über diverse Dosier- und Verteileinrichtungen verschiedenste Stoffe wie Schüttgüter oder Flüssigkeiten verteilt bzw. ausgebracht. Mit Hilfe von landwirtschaftlichen Erntemaschinen wie bspw. Mähdreschern werden verschiedenste Getreidesorten geerntet. Das Erntegut liegt in aller Regel als Schüttgut vor. Diese verschiedenen landwirtschaftlichen Maschinen führen als gemeinsames Ausstattungsmerkmal einen oder mehrere Behälter bzw. Tanks mit, in denen die auszubringenden bzw. die geernteten Flüssigkeiten bzw. Schüttgüter bevorratet bzw. aufbewahrt werden. Insbesondere bei landwirtschaftlichen Verteilmaschinen ist es von Vorteil, wenn der Füllstand dieser Tanks bzw. Behälter kontinuierlich überwacht bzw. gemessen werden kann, d.h. wenn permanent der jeweilige Füllgrad erfasst wird.

Die durch die Füllstandsüberwachung ermittelten Werte können auf unterschiedliche Weise verwendet werden. So bietet die exakte Anzeige des Füllgrades einer Maschine für den Maschinenführer den Vorteil, dass dieser die Befüllung bzw. die Entleerung der Maschine besser planen kann. Somit lässt sich bspw. auch die jeweilige Befüll- oder Entleerungslogistik entsprechend besser steuern. Auch können mittels der Füllstandsüberwachung verschiedenste Maschineneinstellungen kontrolliert oder abgeglichen werden. So kann bei Verteilmaschinen die tatsächlich ausgebrachte Menge mit der von den Dosiervorrichtungen angezeigten Mengen oder mit der von einem sog. Hektarzähler gemessenen Fläche verglichen und ggf. entsprechend angeglichen werden. Diese Angleichung kann entweder automatisch oder manuell erfolgen. Generell sind verschiedenste Verwendungszwecke vorstellbar, für die der genau ermittelte Füllstand wichtig sein kann.

Bei der Füllstandsmessung von Schüttgütern ist zu beachten, dass diese Schüttgüter beim Auslauf aus einem Tank immer einen Schüttkegel aufweisen. Dieser Effekt macht sich besonders deutlich bei unsymmetrisch geformten Tanks oder Behältern bemerkbar. Das heißt, dass je steiler eine Behälterwand ist, desto schneller läuft das Schüttgut in Richtung der Dosiereinrichtung bzw. in Richtung der Tankauslauföffnung. In umgekehrter Weise gilt: je flacher eine Behälterwand ist, desto langsamer läuft das Schüttgut zur Tankauslauföffnung und desto ausgeprägter wirkt sich ein Schüttkegel aus. Die gebildeten Schüttkegel werden zusätzlich von der Art der Befüllung und von der Konsistenz des Schüttgutes beeinflusst. Um den Füllstand von Schüttgütern auch in unsymmetrisch aufgebauten Tanks möglichst exakt zu messen, müssen bei der Messung diese Schüttkegel berücksichtigt werden.

Zur Überwachung des Füllstandes wurden bislang verschiedenste Ansätze verfolgt. So gibt es bspw. Anwendungen, bei denen der Füllstand mittels eines Ultraschallsensors gemessen wird. Bei diesem Prinzip misst ein Sensor permanent den Abstand zwischen Sensor und Medium und wertet die Messwerte aus, um daraus den aktuellen Füllstand im Behälter abzulesen. Bei diesem Messprinzip können jedoch mehrere Probleme auftreten. So ist bspw. das Messfeld, also der Messabstand sowie der Messdurchmesser bzw. Messzylinder, eines Ultraschallsensors begrenzt; d.h. jeder Ultraschallsensor kann nur einen vom jeweiligen Sensor abhängigen Messbereich erfassen. Handelt es sich jedoch um einen großen Tank, reicht ggf. dieser Messbereich nicht aus, um den Füllstand zuverlässig zu ermitteln. Um den Füllstand des gesamten Tanks erfassen zu können, muss ein Ultraschallsensor mit entsprechend großem Messbereich verwendet werden. Diese Sensoren sind jedoch in der Anschaffung relativ teuer. Alternativ können auch mehrere Ultraschallsensoren verwendet werden, was jedoch ebenfalls relativ hohe Kosten verursacht. Zudem wird bei Verwendung mehrerer Ultraschallsensoren eine relativ aufwändige Auswerteschaltung erforderlich, da die Messwerte von mehreren Sensoren gemeinsam verarbeitet werden müssen.

Weiterhin wäre es denkbar, nur ein Teilvolumen des Behälters zu überwachen, so dass bspw. bis zu einem gewissen Bereich die Füllstandsanzeige lediglich eine Information liefert, dass der Füllstand größer als 50% des Gesamtvolumens ist, wogegen erst unterhalb dieses Wertes eine exaktere Messung erfolgt. Der Nachteil dieser Variante liegt allerdings darin, dass keine exakte Messung aller Füllstände möglich ist, so dass bspw. ein Nachfüllvorgang nach Verbrauch einer kleineren Teilmenge aus dem Tank mit erheblichen Unsicherheiten behaftet wäre, da solche kleinen Teilmengen kaum erfassbar sind.

Ein weiterer Ansatz zur Erfassung eines Füllstandes kann darin bestehen, in bestimmten Abständen entlang der Behälterwand kapazitive Endschalter anzubringen. Je nach Füllstand können diese Endschalter Signale liefern, aus denen ein Füllstand errechnet werden kann. Allerdings ist diese Art der Füllstandsüberwachung relativ ungenau, selbst wenn eine größere Anzahl von Sensoren montiert wird. Nachteilig ist zudem, dass mit dieser Messvariante keine kontinuierliche Messung möglich ist, da die Endschalter jeweils Grenzwerte erfassen können, nicht jedoch unterschiedliche Messwerte.

Ein weiterer Ansatz für eine kontinuierliche Füllstandsmessung findet sich in der US 2012 031 66 73 A1. Bei dieser landwirtschaftlichen Maschine ist ein Tank mit Hilfe von sog. Wiegebolzen montiert. Die Wiegebolzen erfassen permanent den Füllgrad des Tanks und liefern entsprechende elektrische Signale. Die Aufhängung und Befestigung eines Tanks mittels Wiegebolzen erfordert jedoch einigen Bauaufwand und verursacht damit Kosten. Zudem ist die Erfassung der Tankmasse bei zweigeteilten Tanks schwierig, da jeweils nur die Masse des gesamten Tanks gewogen werden kann. Handelt es sich aber um verschiedene Stoffe, die mit verschiedenen Ausbringmengen ausgebracht werden, kann ein solches System nicht verwendet werden.

Aus dem Stand der Technik ist es bekannt, kapazitive Stabsonden zur Füllstandsüberwachung zu verwenden. Eine Variante einer solchen Stabsonde ist in der DE 10 2008 015 052 A1 beschrieben. Bei diesem Messprinzip bilden die Behälterwand, das Schütt- oder Füllgut und eine Messelektrode einen Kondensator. Die Messelektrode sowie die Behälterwand stellen dabei die Kondensatorplatten dar, während das veränderliche Dielektrikum durch das Füllgut gebildet wird. Bedingt durch eine höhere Dielektrizitätszahl des Füllguts gegenüber Luft nimmt die Kapazität des Kondensators bei steigender Bedeckung der Elektrode zu. Diese Kapazitätsänderung wird von einer Auswerteschaltung in ein füllstandsproportionales Signal umgewandelt.

Um mit derartigen Stabsonden auch in Behältern messen zu können bei denen die Behälterwand nicht als Masse bzw. als Kondensatorplatte verwendet werden kann, wie es bspw. bei Kunststoffbehältern der Fall ist, kann die Masse im Stab mitgeführt werden, so das sich auch so wieder Kondensatoren ausbilden können. Solche Stabsonden haben jedoch den Nachteil, dass mit ihnen nur eine Messung zwischen Sonde und Masse erfolgen kann. Um jedoch den Füllstand in einem asymmetrisch oder unregelmäßig geformten Tank zu messen, muss die Sonde entlang der Tankwand verlegt werden, insbesondere zur exakten Erfassung von Schüttkegeln. Dadurch ist bei großen und asymmetrischen Tanks die Herstellung dieser Sonden relativ aufwändig und teuer; zudem müssen die Sonden jeweils an unterschiedliche Tankformen angepasst werden. Bei einer Platzierung einer solchen Sonde in der Tankmitte besteht das Problem, dass der Schüttkegel von Schüttgütern nicht mit erfasst wird, was wiederum das Messergebnis verfälscht.

Darüber hinaus besteht bei Stabsonden die Gefahr, dass diese verbiegen können, so bspw. beim Einfüllen von Schüttgut in den Behälter und durch den Kontakt oder die Bewegungen des Schüttgutes beim Transport oder während der Lagerung. Auch durch das Auslaufen des Schüttguts aus dem Behälter kann es zu Verformungen der Stabsonde kommen.

Ausgehend vom bekannten Stand der Technik liegt der vorliegenden Erfindung die Aufgabe zu Grunde, eine kontinuierlich arbeitende Füllstandsüberwachung einer landwirtschaftlichen Verteil- oder Erntemaschine zu liefern, die für unterschiedliche Behälterformen und -materialien sowie für die unterschiedlichsten Inhaltsstoffe geeignet ist. Zudem soll sich die Füllstandsüberwachung kostengünstig und mit wenig Bauaufwand herstellen und montieren lassen.

Diese Aufgabe wird mit dem Gegenstand des unabhängigen Anspruchs 1 gelöst. Merkmale vorteilhafter Weiterbildungen der Erfindung lassen sich den abhängigen Ansprüchen sowie der Beschreibung und den Zeichnungen entnehmen. Zur Lösung der genannten Aufgabe schlägt die Erfindung einen Vorrats-, Aufbewahrungs- und/oder Schüttgutbehälter einer landwirtschaftlichen Maschine, insbesondere einer landwirtschaftlichen Verteilmaschine zur Aufnahme von riesel- oder fließfähigem Schüttgut und/oder von flüssigen Medien vor. Der Behälter weist eine zumindest abschnittsweise trichterförmige Kontur mit unterer Auslassöffnung und randseitige Wandabschnitte auf, die unterschiedlich geformt sein können. Weiterhin umfasst der Behälter eine nach kapazitivem Messprinzip arbeitende Füllstandsmesseinrichtung, die wenigstens einen Leitungsabschnitt umfasst, der in einem unteren Bereich des Behälters mündet oder angeschlossen ist und innerhalb des Behälters verlegt ist. Vorzugsweise ist dieser Leitungsabschnitt als mehradriges flexibles Kabel ausgebildet, das in der beschriebenen Weise als Kapazität dienen und damit als Messelektrode fungieren kann. Gemäß einer Ausführungsvariante der Erfindung kann die Füllstandsmesseinrichtung auch wenigstens zwei Leitungsabschnitte umfassen, welche jeweils in einem unteren Bereich des Behälters münden und in nicht paralleler Anordnung im Behälterinnenraum verlegt sind. Auf die beschriebene Weise wird eine kontinuierlich arbeitende Füllstandsüberwachung einer landwirtschaftlichen Verteil- oder Erntemaschine geliefert, die sich für einen Einbau in unterschiedliche Behälterformen eignet und für eine Anwendung in Behältern unterschiedlichen Materials geeignet ist. Der erfindungsgemäße Behälter mit der ihm zugeordneten Messeinrichtung ist damit sowohl für symmetrische wie auch für asymmetrische Behälterformen geeignet. Auch eignet sich die Messeinrichtung zum Einsatz bei metallischen wie auch bei nichtmetallischen Behältern. Des Weiteren kann die beschriebene Füllstandsüberwachung einfach montiert und hergestellt und damit sehr kostengünstig zur Verfügung gestellt werden. Vorteilhaft ist zudem, dass der Behälter mit der ihm zugeordneten Füllstandsüberwachung sowohl für Flüssigkeiten wie auch für Schüttgüter geeignet ist.

Bei dem erfindungsgemäßen Behälter kann vorgesehen sein, dass zumindest ein Leitungsabschnitt der Füllstandsmesseinrichtung entlang eines Wandabschnittes im Innenraum des Behälters angeordnet ist. Wahlweise kann der Leitungsabschnitt oder zumindest einer der Leitungsabschnitte der Füllstandsmesseinrichtung zwischen dem unteren Bereich des Behälters und einem oberen Rand fixiert sein und in schrägem Verlauf innerhalb des Behälters angeordnet sein.

Sinnvoll kann darüber hinaus auch eine Variante des Behälters sein, bei dem die Messanordnung mehr als einen Leitungsabschnitt aufweist, bspw. zwei oder mehr Leitungsabschnitte, wobei diese wenigstens zwei Leitungsabschnitte der Füllstandsmesseinrichtung jeweils an benachbarten oder gegenüber liegenden Wandabschnitten im Innenraum des Behälters angeordnet sein können.

Die Erfindung schlägt zur Lösung der oben genannten Aufgabe die Platzierung einer kapazitiven Seilsonde bzw. Kabelsonde innerhalb eines Behälters vor, der mit rieselfähigem Schüttgut oder mit einer Flüssigkeit gefüllt sein kann. Die verwendete Seilsonde arbeitet im Prinzip ähnlich wie eine kapazitive Stabsonde, weist jedoch gegenüber dieser die Besonderheit auf, dass die Messstrecke nicht als gerade verlaufender Stab, sondern als gerade, gekrümmt oder in Kurven verlaufendes Seil bzw. elektrisch leitfähiges Kabel ausgeführt ist. Die kapazitive Seilsonde arbeitet nach folgendem Prinzip. Die metallisch ausgeführte Behälterwand, das Schütt- oder Füllgut und eine Messelektrode (Kabel) bilden einen Kondensator. Die Messelektrode und die Behälterwand bilden hierbei die Kondensatorplatten. Das Füllgut bildet das Dielektrikum. Durch die höhere Dielektrizitätskonstante des Füllgutes gegenüber der Luft nimmt die Kapazität des Kondensators bei steigender Bedeckung der Messelektrode zu. Diese Kapazitätsänderung wird von einer Auswerteelektronik in ein füllstandsproportionales Signal umgewandelt. Um den Füllstand auch in Behältern messen zu können, bei denen die Behälterwand nicht aus Metall besteht, bspw. in Kunststofftanks, kann eine Weiterbildung der Sonde verwendet werden, in der ein zusätzliches Kabel bzw. ein zusätzlicher Pol eines Kabel mitgeführt wird, der hierbei als Masse dient, so dass mit Hilfe dieses Pols wieder ein Kondensator gebildet wird.

Die Seilsonde kann hier als Handelsübliches ein- oder mehrpoliges Elektrokabel ausgeführt werden. So könnte bspw. bei metallischen Behältern ein einpoliges Kabel verwendet werden, da ja in metallischen Behältern nur eine Messelektrode erforderlich ist, während die Behälterwand als Gegenelektrode dienen kann. Bei einem Kunststofftank wäre dagegen ein zweipoliges Kabel erforderlich, wobei ein Pol als Messelektrode und ein weiterer Pol als Gegenelektrode dient. Generell ist es von Vorteil, mehrpolige Kabel zu verwenden, da durch entsprechende Verschaltung der einzelnen Pole die sog. parasitäre Kapazität verringert werden kann. Dadurch wird zum einen der Messbereich größer; zum anderen wird die Messung genauer. Diese Verschaltung soll jedoch nicht Gegenstand der Anmeldung sein.

Der große Vorteil einer Seil- gegenüber einer Stabsonde liegt darin, das mit Hilfe dieser nicht für jede Tankform ein separater Stab angefertigt werden muss, sondern dass je nach gegebener Tankform und Tankgröße das Kabel nur verlängert bzw. angepasst werden muss. Das flexibel ausgeführte Kabel verhindert auch mechanische Belastungen durch Verbiegen, was bspw. durch Schüttgutbewegungen entstehen kann. Ebenso hat die Kabelsonde den Vorteil, dass mit ihrer Hilfe sowohl in Kunststoff- wie auch in Metallbehältern gemessen werden kann. Weiter besteht der Vorteil, dass die Sonde sowohl Schüttgüter wie auch Flüssigkeiten messen kann.

Ein weiterer großer Vorteil bei Verwendung einer Seilsonde liegt darin, dass das Kabel sehr flexibel verlegt werden kann und es dadurch möglich wird, das Kabel so zu verlegen, das auch die Schüttkegel entsprechend mit gemessen werden können, so dass sich durch entsprechende Anordnung der Kabel ein Mittelwert des Füllstandes bildet, wodurch der tatsächliche Füllstand so genau wie möglich ermittelt wird.

Wie die genaue Anordnung der Sonden erfolgt, ist von der Tankform abhängig und muss bei jeder Tankform entsprechend angepasst werden. So ist es bspw. bei Flüssigkeiten ausreichend, eine Sonde einmal von oben nach unten vertikal durch den Behälter zu spannen, wogegen bei Behältern mit Granulaten oder Schüttgütern die Sonden bspw. in U-förmigem Verlauf mehrmals von oben nach unten horizontal und quer durch den Tank gespannt werden sollten. Generell ist die Anordnung der Sonden dem Anwendungsfall sowie der gewünschten Messgenauigkeit anzupassen. Eine bevorzugte Anordnung ist hier eine Y-förmige Anordnung, bei der eine Seilsonde entlang der am flachsten ausgebildeten Behälterwand verlegt wird und eine weitere Sonde von oben nach unten vertikal durch den Tank gelegt wird.

Der Messkopf der Seilsonde kann z.B. so ausgeführt sein, dass entweder eine Seilsonde aber auch zwei oder mehr Seilsonden angeschlossen werden können. Durch die Verwendung von mehreren Seilsonden ergibt sich eine größere Kapazität die aber ebenso wieder von der Auswerteeinheit in ein elektrisches Signal umgewandelt werden kann.

Das ein- oder mehrpolige Kabel kann aus einem Material bestehen, das unempfindlich gegenüber chemisch aggressiven Stoffen ist. Auch kann das Kabel so gestaltet sein, dass es unempfindlich gegenüber abrasiven Stoffen wie Schüttgüter ist. Sinnvollerweise sind die verwendeten Leitungsabschnitte und ihre Anschlussverbindungen so auszugestalten, dass sie gegen Medieneinflüsse aller Art resistent und/oder abgedichtet sind.

Die von der Seilsonde erfasste Kapazität wird anschließend in einem sog. Sondenkopf verarbeitet und in ein analoges elektrisches Signal umgewandelt. Als Ausgabegrößen können bspw. 4 - 20 mA vorhanden sein. Jedem Stromwert kann hier in analoger Signalverarbeitung ein bestimmter Füllstand zugeordnet werden. Wahlweise können die Signale auch in einem Feldbus- oder CAN-Bus-System weitergegeben werden, typischerweise als digitale Signale.

Gemäß der Erfindung ist der wenigstens eine Leitungsabschnitt mit einer elektrischen Auswerteeinheit gekoppelt, die aus den kapazitiven Messsignalen des Leitungsabschnittes einen Füllstand des Behälters errechnet. Wahlweise kann diese Auswerteeinheit auf eine Kennfelddatei zugreifen, in der den jeweiligen Messsignalen proportional zuordenbare Füllstände abgespeichert sein können. Bei Verwendung von zwei oder mehr Leitungsabschnitten zur Generierung von Messsignalen können diese gemeinsam in der Auswerteeinheit verarbeitet werden, um daraus einen Füllstand des Behälters zu errechnen. Auch hierfür kann ggf. die Verwendung eines Kennfeldes sinnvoll sein.

Die Sonde bietet darüber hinaus die Möglichkeit, Schaltpunkte im Bereich der Messstrecke, aber auch darüber und darunter beliebig festzulegen. Das heißt es ist möglich innerhalb der Messstrecke beliebige Punkte als "Tank voll" oder "Tank leer" zu definieren. Dies ist vor allem dann ein Vorteil, wenn bspw. der Tank nicht komplett gefüllt wird, jedoch eine möglichst genaue Auflösung gewünscht wird. Generell ist es möglich, dass die elektrische Auswerteeinheit wenigstens zwei unterschiedliche Füllstandsinformationen aus den Messsignalen errechnet und als optische und/oder akustische Füllstandssignale ausgibt. Es können aber auch wesentlich mehr unterschiedliche Füllstandswerte erfasst und ausgegeben werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Darstellung der wesentlichen Komponenten einer Ausführungsvariante einer Messanordnung zur kapazitiven Erfassung eines Füllstandes eines Schüttgutbehälters oder Tanks einer landwirtschaftlichen Maschine, insbesondere einer landwirtschaftlichen Verteilmaschine.
Fig. 2 zeigt eine schematische Darstellung einer kapazitiven Messsonde mit zugehörigem Sondenkopf und Anzeigeeinrichtung.
Fig. 3 zeigt eine perspektivische Ansicht eines Schüttgutbehälters einer landwirtschaftlichen Verteilmaschine.
Fig. 4 zeigt einen Längsschnitt des Behälters entlang der Schnittlinie IV-IV gemäß Fig. 3.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie der erfindungsgemäße Behälter bzw. die erfindungsgemäße Messanordnung ausgestaltet sein können, sind jedoch nicht als irgendwie geartete Begrenzung zu verstehen.

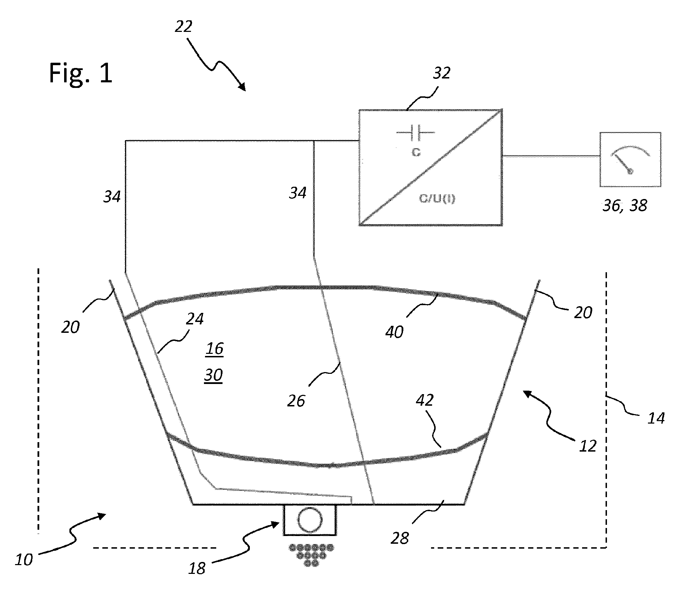

Die schematische Darstellung der Fig. 1 zeigt ein Ausführungsbeispiel einer erfindungsgemäßen Messanordnung 10 zur Erfassung eines Füllstandes eines festwandigen oder zumindest in Teilabschnitten flexiblen oder verformbaren Vorrats-, Aufbewahrungs- und/oder Schüttgutbehälters 12 einer hier lediglich angedeuteten landwirtschaftlichen Verteilmaschine 14. Der Behälter 12 dient der Aufnahme von rieseloder fließfähigem Schüttgut 16 oder auch von flüssigen Medien und weist eine trichterförmige Kontur mit einer unteren Auslassöffnung 18 und randseitige Wandabschnitte 20 auf, die in spitzem Winkel gegen die Vertikale geneigt sind, so dass das Schüttgut 16 in Richtung zur unteren Auslassöffnung 18 abfließen kann.

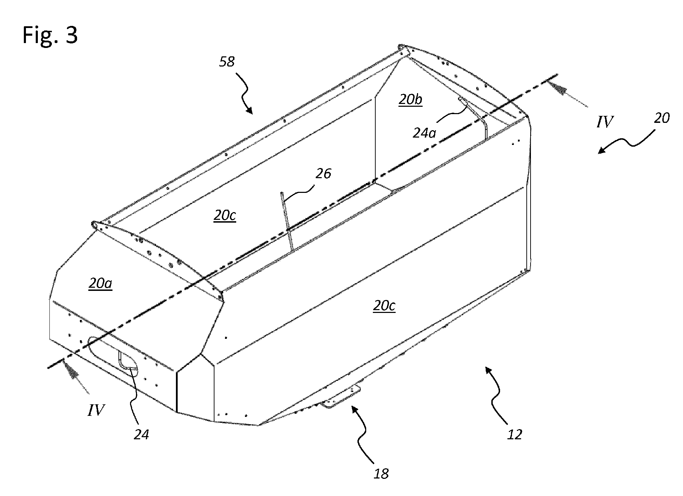

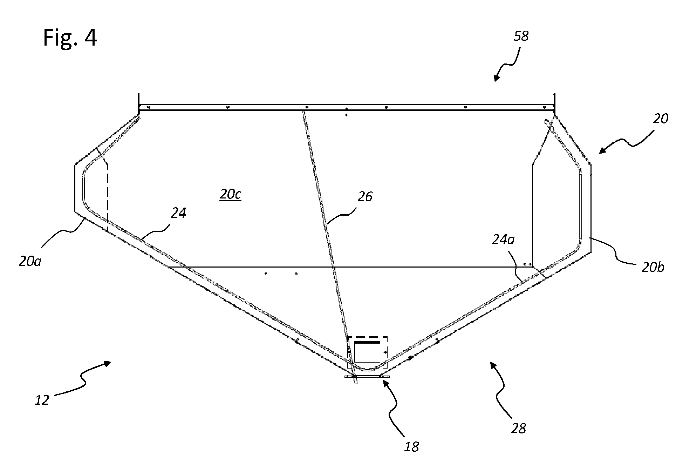

Die erfindungsgemäße Messanordnung 10 umfasst eine nach kapazitivem Messprinzip arbeitende Füllstandsmesseinrichtung 22, die wenigstens einen Leitungsabschnitt 24 und/oder 26 umfasst, welche jeweils in einem unteren Bereich 28 des Behälters 12 münden und in nicht paralleler Anordnung im Behälterinnenraum 30 verlegt sind. Wie es die Figuren 3 und 4 erkennen lassen, sind die beiden Leitungsabschnitte 24 und 26 der Füllstandsmesseinrichtung 22 entlang der Wandabschnitte 20 im Innenraum 30 des Behälters 12 angeordnet und verlegt.

Weiterhin lässt die Fig. 1 erkennen, dass die zwei Leitungsabschnitte 24 und 26 mit einer elektrischen Auswerteeinheit 32 gekoppelt sind, die aus den kapazitiven Messsignalen 34 des wenigstens einen Leitungsabschnittes 24 und/oder 26 einen Füllstand des Behälters 12 errechnet, der über eine geeignete Anzeigeeinrichtung 36 visualisiert wird. Die Anzeigeeinrichtung 36 kann bspw. ein Bildschirm, eine Digitalanzeige zur Anzeige von Zahlenwerten, eine Farbanzeige oder auch ein einfaches Zeigerinstrument 38 o. dgl. sein.

Die Fig. 1 deutet beispielhaft zwei unterschiedliche Füllstände 40 und 42 des Schüttgutes 16 an. Ein oberer Füllstand 40 kann unmittelbar nach dem Befüllen des Behälters 12 eine konvexe Wölbung nach oben aufweisen, da rieselfähiges Schüttgut 16 typischerweise keine flache Oberfläche bildet, sondern einen Schüttkegel oder zumindest eine leichte Wölbung, die sich ggf. bei einer Fahrt der landwirtschaftlichen Maschine bzw. Verteilmaschine 14 über unebenen Untergrund aufgrund der dabei an den Behälter 12 und das darin befindliche Schüttgut 16 übertragenen Vibrationen einebnen kann. Nach dem Entleeren eines Teils des Schüttgutes 16 durch die untere Auslassöffnung 18 ergibt sich ein unterer Füllstand 42, der typischerweise einen konkaven Schüttkegel mit höherem Niveau an den Wandabschnitten 20 und tieferem Niveau in der Mitte oberhalb des Auslasses 18 aufweist. Auch dieser tiefere Füllstand 42 kann sich jedoch während der Fahrt der landwirtschaftlichen Verteilmaschine 14 nivellieren und einebnen. Um verschiedene Füllstände und die dabei typischerweise auftretenden Schüttkegel einer konkreten Behälterkontur zu berücksichtigen, kann es ggf. sinnvoll sein, wenn die Auswerteeinheit 32 auf eine Kennfelddatei zugreift, in der den jeweiligen Messsignalen 34 zuordnenbare Füllstände 40, 42 abgespeichert sind. Eine einfache Füllstandskontrolle kann bereits dadurch realisiert werden, wenn die elektrische Auswerteeinheit 32 wenigstens zwei unterschiedliche Füllstandsinformationen aus den Messsignalen 34 errechnet und als optische und/oder akustische Füllstandssignale an die Anzeigeeinrichtung 36 bzw. an das Zeigerinstrument 38 ausgibt.

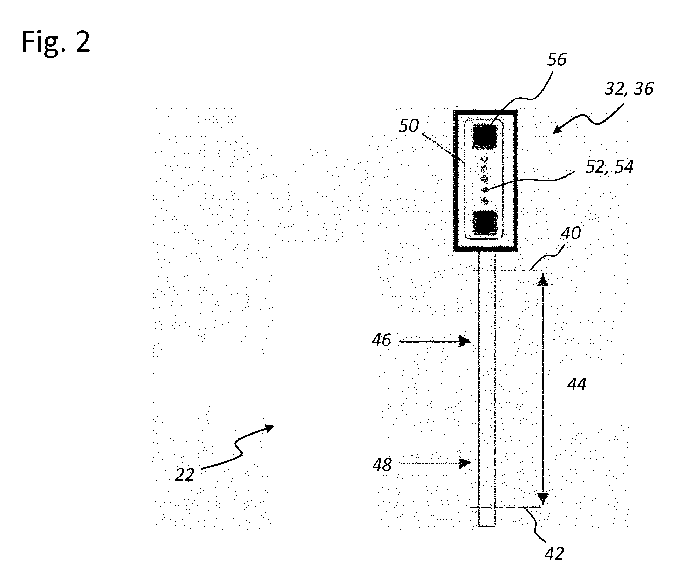

Die schematische Darstellung der Fig. 2 verdeutlicht das Messprinzip der erfindungsgemäßen Messanordnung 10, die im Wesentlichen darauf beruht, einen zwischen oberem Füllstand 40 und unterem Füllstand 42 im Behälterinnenraum 30 verlegten Leitungsabschnitt 24 bzw. 26 als Messstrecke 44 zu definieren, innerhalb derer zwei Schaltpunkte als Maximalwert 46 für den oberen Füllstand 40 und als Minimalwert 48 für den unteren Füllstand 42 gewählt werden können. Ein Sondenkopf 50 kann die Auswerteeinheit 32 bilden, in der die Anzeigeeinrichtung 36 durch eine Balkenanzeige 52 mit mehreren Leuchtelementen 54 vorgesehen sein kann. Weiterhin umfasst der Sondenkopf 50 eine Eingabeeinrichtung 56 in Form von Tasten bzw. einer Tastatur mit mehreren Bedienelementen, mit der die Schaltpunkte für die unteren und oberen Werte 46 und 48 über die Messstrecke 44 definiert werden können. Wahlweise kann dieser Sondenkopf 50 mit zwei oder mehr solcher Leitungsabschnitte 24, 26 mit den entsprechend definierbaren Messstrecken 44 elektrisch leitend verbunden werden.

Die perspektivische Ansicht der Fig. 3 zeigt einen Schüttgutbehälter 12, wie er als Saatgut- oder Düngertank einer landwirtschaftlichen Verteilmaschine 14 Verwendung finden kann. Die Fig. 4 zeigt einen Längsschnitt des in Fig. 3 gezeigten Behälters 12 entlang der Schnittlinie IV-IV. Der Behälter 12 ist oben offen zur schnellen Befüllung mit rieselfähigem Schüttgut wie Saatgut oder Dünger, kann jedoch wahlweise mit einer Klappe (hier nicht dargestellt) verschlossen werden. Wie die Figuren 3 und 4 erkennen lassen, weist der Behälter 12 jeweils Wandabschnitte 20 mit unterschiedlichen Neigungswinkeln auf. Der untere Behälterbereich 28 ist so gestaltet, dass die Wandabschnitte 20 jeweils eine Neigung von ca. 30 Grad zur Horizontalen aufweisen und sich im Bereich der Auslassöffnung 18 als tiefster Stelle treffen, so dass das Schüttgut weitgehend ungehindert bis zur Entleerung des Behälters 12 im Bereich der Auslassöffnung 18 zusammenlaufen und dort entnommen werden kann. An die geneigten unteren Bereiche im unteren Behälterbereich 28 schließen sich relativ kurze vertikale Wandabschnitte an der breitesten Stelle des Behälters 12 an, die schließlich in Richtung zur oberen Behälteröffnung 58 jeweils nach innen geneigt sind, so dass die Behälteröffnung 58 kleiner ist als der Außenumfang des gesamten Behälters 12.

Wie die Fig. 3 und insbesondere der Längsschnitt der Fig. 4 erkennen lassen, folgen die Leitungsabschnitte 24, 24a und 26 jeweils den Verläufen der Wandabschnitte 20 des Behälters 12, und zwar in Längsrichtung an den vorderen und hinteren Wänden 20a und 20b, und in Querrichtung an wenigstens einer Seitenwand 20c. Die Messstrecken 44 der Leitungsabschnitte 24, 24a und 26 erstrecken sich damit von der unteren Auslassöffnung 18 des Behälters 12 über die geneigten und vertikalen Wandabschnitte 20a, 20b und 20c bis nahe zur oberen Behälteröffnung 58 und liefern Messsignale 34, die jeweils abhängig sind vom Füllstand des Behälters 12.

Es muss an dieser Stelle nicht gesondert erwähnt werden, dass die Leitungsabschnitte 24, 24a und 26 sowie ihre jeweiligen Anschlussverbindungen gegen Medieneinfluss resistent und/oder abgedichtet sind.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Messanordnung
- 12: Behälter
- 14: landwirtschaftliche Verteilmaschine
- 16: Schüttgut
- 18: Auslassöffnung
- 20: Wandabschnitt, Behälterwand
- 20a: vordere Behälterwand
- 20b: hintere Behälterwand
- 20c: Seitenwand
- 22: Füllstandsmesseinrichtung
- 24: erster Leitungsabschnitt (vorderer erster Leitungsabschnitt)
- 24a: hinterer erster Leitungsabschnitt
- 26: zweiter Leitungsabschnitt
- 28: unterer Behälterbereich, Behälterboden
- 30: Behälterinnenraum
- 32: Auswerteeinheit
- 34: kapazitives Messsignal
- 36: Anzeigeeinrichtung
- 38: Zeigerinstrument
- 40: oberer Füllstand
- 42: unterer Füllstand
- 44: Messstrecke
- 46: Maximalwert
- 48: Minimalwert
- 50: Sondenkopf
- 52: Balkenanzeige
- 54: Leuchtelement
- 56: Eingabeeinrichtung
- 58: obere Behälteröffnung

## Patentansprüche

1. Festwandiger Vorrats-, Aufbewahrungs- und/oder Schüttgutbehälter (12) einer landwirtschaftlichen Verteilmaschine (14) zur Aufnahme von riesel- oder fließfähigem Schüttgut (16) oder von flüssigen Medien, mit einer zumindest abschnittsweise trichterförmigen Kontur mit unterer Auslassöffnung (18) und randseitigen Wandabschnitten (20, 20a, 20b, 20c), und mit einer nach kapazitivem Messprinzip arbeitenden Füllstandsmesseinrichtung (22), die wenigstens einen Leitungsabschnitt (24, 24a, 26) umfasst, der in einem unteren (28) Bereich des Behälters (12) mündet und im Behälterinnenraum (30) verlegt ist, wobei der wenigstens eine Leitungsabschnitt (24, 24a, 26) der Füllstandsmesseinrichtung (22) als flexibles Kabel ausgebildet ist.

2. Behälter nach Anspruch 1, bei dem der wenigstens eine Leitungsabschnitt (24, 24a, 26) der Füllstandsmesseinrichtung (22) entlang eines Wandabschnittes (20, 20a, 20b, 20c) im Innenraum (30) des Behälters (12) angeordnet ist.

3. Behälter nach Anspruch 1 oder 2, bei dem die Füllstandsmesseinrichtung (22) wenigstens zwei Leitungsabschnitte (24, 24a, 26) umfasst, welche jeweils in einem unteren (28) Bereich des Behälters (12) münden und in nicht paralleler Anordnung im Behälterinnenraum (30) verlegt sind.

4. Behälter nach Anspruch 3, bei dem zumindest einer der wenigstens zwei Leitungsabschnitte (24, 24a, 26) der Füllstandsmesseinrichtung (22) entlang eines Wandabschnittes (20, 20a, 20b, 20c) im Innenraum (30) des Behälters (12) angeordnet ist.

5. Behälter nach Anspruch 3 oder 4, bei dem die wenigstens zwei Leitungsabschnitte (24, 24a, 26) der Füllstandsmesseinrichtung (22) jeweils an benachbarten oder gegenüber liegenden Wandabschnitten (20, 20a, 20b, 20c) im Innenraum (30) des Behälters (12) angeordnet sind.

6. Behälter nach einem der Ansprüche 1 bis 5, bei dem zumindest einer der wenigstens zwei Leitungsabschnitte (24, 24a, 26) der Füllstandsmesseinrichtung (22) zwischen dem unteren Bereich (28) des Behälters (12) und einem oberen Rand fixiert ist und in schrägem Verlauf innerhalb des Behälters (12) angeordnet ist.

7. Behälter nach einem der Ansprüche 1 bis 6, bei dem die Leitungsabschnitte (24, 24a, 26) der Füllstandsmesseinrichtung (22) jeweils als flexible Kabel ausgebildet sind.

8. Behälter nach einem der Ansprüche 1 bis 7, bei dem die Leitungsabschnitte (24, 24a, 26) und ihre Anschlussverbindungen gegen Medieneinfluss resistent und/oder abgedichtet sind.

9. Behälter nach einem der Ansprüche 1 bis 8, bei dem der wenigstens eine Leitungsabschnitt (24, 24a, 26) mit einer elektrischen Auswerteeinheit (32) gekoppelt ist, die aus den kapazitiven Messsignalen (34) des wenigstens einen Leitungsabschnitts (24, 24a, 26) einen Füllstand (40, 42) des Behälters (12) mit Schüttgut (16) errechnet.

10. Behälter nach Anspruch 9, bei dem die Auswerteeinheit (32) auf eine Kennfelddatei zugreift, in der den jeweiligen Messsignalen (34) zuordnenbare Füllstände (40, 42) abgespeichert sind.

11. Behälter nach Anspruch 9 oder 10, bei dem die elektrische Auswerteeinheit (32) wenigstens zwei unterschiedliche Füllstandsinformationen aus den Messsignalen (34) errechnet und als optische und/oder akustische Füllstandssignale ausgibt.

12. Füllstandsmesseinrichtung (22), die nach kapazitivem Messprinzip arbeitet und die wenigstens einen Leitungsabschnitt (24, 24a, 26) umfasst, der im Innenraum (30) eines Behälters (12) einer landwirtschaftlichen Verteilmaschine (14) verlegt ist.

13. Füllstandsmesseinrichtung nach Anspruch 12, die wenigstens zwei Leitungsabschnitte (24, 24a, 26) umfasst, welche im Innenraum (30) eines Behälters (12) einer landwirtschaftlichen Verteilmaschine (14) in nicht paralleler Anordnung verlegt sind.

14. Füllstandsmesseinrichtung nach Anspruch 12 oder 13, die Teil einer landwirtschaftlichen Verteilmaschine (14) mit einem Behälter (12) gemäß einem der Ansprüche 1 bis 11 ist.
